## Europäisches Patentamt
## European Patent Office
## Office européen des brevets

(11) Veröffentlichungsnummer: **0 135 914**
**B1**

(12)

# EUROPÄISCHE PATENTSCHRIFT

(45) Veröffentlichungstag der Patentschrift:
**19.11.87**

(21) Anmeldenummer: **84111182.6**

(22) Anmeldetag: **19.09.84**

(51) Int. Cl.⁴: **C 08 L 95/00** // C08K3/14, C08K3/34, C08K3/38

(54) Schienenuntergussmasse und Verfahren zu ihrer Herstellung.

(30) Priorität: **23.09.83 DE 3334483**

(43) Veröffentlichungstag der Anmeldung:
**03.04.85 Patentblatt 85/14**

(45) Bekanntmachung des Hinweises auf die Patenterteilung:
**19.11.87 Patentblatt 87/47**

(84) Benannte Vertragsstaaten:
**AT BE CH DE FR GB IT Li NL SE**

(56) Entgegenhaltungen:
FR - E - 5 431
GB - A - 1 247 171

**Die Akte enthält technische Angaben, die nach dem Eingang der Anmeldung eingereicht wurden und die nicht in dieser Patentschrift enthalten sind.**

(73) Patentinhaber: **Georg Börner Chemisches Werk für Dach- und Bautenschutz GmbH und Co. KG, Sailerweg 10 Postfach 10, D-6430 Bad Hersfeld (DE)**

(72) Erfinder: **Küther, Jürgen, Dr., Hönebacher Strasse 13, D-6431 Friedewald (DE)**

(74) Vertreter: **Kraus, Walter, Dr. et al, Patentanwälte Kraus, Weisert & Partner Thomas-Wimmer-Ring 15, D-8000 München 22 (DE)**

## Beschreibung

Schienenuntergussmassen werden im Schienenunterbau zur Lagerung, Schall- und Schwingungsdämpfung eingesetzt. Gleichzeitig wird auch der Betonunterbau vor Zerstörung durch die alternierende Stossbeanspruchung geschützt.

Als Schienenuntergussmassen werden vergiessbare bituminöse Massen verwendet, die aus speziellen Bitumensorten, wie Hochvakuumbitumen (HVB) und Oxidationsbitumen, und einer elastifizierenden Komponente, wie z.B. bestimmte Kautschuke, Altgummi, beispielsweise in mikronisierter Form, und einem Füllstoff wie Gesteinsmehl, vorzugsweise Quarz, bestehen. Die Schienenuntergussmassen werden im innerstädtischen Verkehr zum Einbau für Schienen von Strassenbahnen benutzt. Sie werden auch gegebenenfalls für die Schienenlagerung mit Zugfernverkehr eingesetzt. Der Unterbau bei der Befestigung der Schienen unterliegt einer enormen Druckbeanspruchung, insbesondere im innerstädtischen Verkehr und Nahverkehr, wo eine kurze Zugfolge üblich ist.

Selbst bei energievernichtenden Dämmaterialien wird der Unterbau über Jahre hinaus irreparabel verformt und gegebenenfalls sogar zu Staub vermahlen, so dass bei starker Verkehrsbelastung, in Kurven, bei Gefällstrecken usw. innerhalb kurzer Zeit eine Sanierung erforderlich wird. Unter derartigen Bedingungen können Unterbauerneuerungen schon nach 2 bis 3 Jahren notwendig werden. Dabei ist zu berücksichtigen, dass die Neuverlegung der Untergussmasse sehr kostspielig ist, da die Schienen wiederum aus- und eingebaut werden müssen. Es ist weiterhin ein besonderer Nachteil, dass bei der Erneuerung der Schienenuntergussmasse jedesmal der Verkehr unterbrochen oder umgeleitet werden muss.

Die Widerstandsfestigkeit von Schienenuntergussmassen ist eine Funktion der Verformbarkeit bei den Gebrauchstemperaturen von −20°C bis 60°C. Die Verarbeitungstemperatur von 250°C, die durch den verwendeten Bitumen bestimmt wird, erfordert weiterhin eine gute Thermostabilität der elastifizierenden Komponente, so dass das Rückstellvermögen im Langzeitvergleich praktisch konstant bleibt.

In der GB-A-1247171 wird eine Beschichtung für eine Strasse beschrieben, welche ein Gemisch aus einem Bitumen und Teilchen von Siliciumcarbid enthält. Dieses Gemisch soll eine gute Reflexion aufweisen. Schienenuntergussmassen werden in dieser Druckschrift nicht beschrieben.

In der DE-A-3141539 wird eine Korrosionsschutzfolie beschrieben, welche zum Aufschmelzen auf Stahlblech geeignet ist und Bitumen und Fasern enthält.

Der vorliegenden Erfindung liegt die Aufgabe zugrunde, eine Schienenuntergussmasse zur Verfügung zu stellen, die eine längere Haltbarkeit als die bekannten, derzeit in der Praxis verwendeten, Massen aufweist. Die erfindungsgemässe Masse soll weiterhin einen hohen Elastizitätsmodul besitzen. Ein hoher Elastizitätsmodul bewirkt, dass die Widerstandsfähigkeit verbessert wird.

Die erfindungsgemässe Masse soll ausserdem eine ausreichende Abriebfestigkeit, Korrosionsbeständigkeit, Wasserbeständigkeit, Temperaturwechselbeständigkeit (kein Quellen oder Schrumpfen), eine geringe Wärmeausdehnung, eine ausreichende Oxidationsbeständigkeit, eine leichte Verarbeitbarkeit und eine gute Bindemittelverträglichkeit aufweisen. Die erfindungsgemässe Schienenuntergussmasse soll ausserdem korrosionsbeständig gegenüber aggressiven Chemikalien, wie Laugen und Säuren, sein.

Überraschenderweise wurde jetzt gefunden, dass eine Schienenuntergussmasse hergestellt werden kann, die die oben aufgeführten Forderungen erfüllt, wenn man in die Schienenuntergussmasse als Füllstoffmaterial ein Metallcarbid, Titan- oder Bornitrid und thermostabile Fasern einarbeitet.

Die Erfindung betrifft eine Schienenuntergussmasse enthaltend Bitumen, eine elastifizierende Komponente und einen Füllstoff, die dadurch gekennzeichnet ist, dass sie 25 bis 67,8 Gew.-% Bitumen, 2 bis 10 Gew.-% Kautschuk, 30 bis 60 Gew.-% Siliciumcarbid, Borcarbid, Titancarbid, kubisches Bornitrid, Titanborid oder Gemische dieser Verbindungen mit einer Härte nach der erweiterten Mohsschen Härteskala über 10 als Füllstoff und 0,2 bis 5 Gew.-% Aramidfasern, Stahlfasern, Mineralfasern oder Kohlefasern enthält.

Die Erfindung betrifft ein Verfahren zur Herstellung der Schienenuntergussmasse, welches dadurch gekennzeichnet ist, dass man in einem Rührwerk das Bitumen auf eine Temperatur im Bereich von 180 bis 250°C erhitzt, zu der Bitumenmasse Kautschuk zugibt und unter Rühren und Erhitzen dispergiert, die Masse solange rührt, bis sie knötchenfrei und hochelastisch ist, danach den Füllstoff und anschliessend die Aramidfasern, Stahlfasern, Mineralfasern oder Kohlefasern hinzugibt und weiterrührt, bis man eine homogene Masse erhält.

Überraschenderweise zeigt es sich, dass die erfindungsgemässe Schienenuntergussmasse eine wesentlich verbesserte Widerstandsfähigkeit, verglichen mit den bekannten Schienenuntergussmassen, aufweist. Die erfindungsgemässe Schienenuntergussmasse besitzt einen hohen Elastizitätsmodul, was bewirkt, dass sie während längerer Zeit verwendet werden kann, ohne dass sie ausgetauscht werden muss. Dies bringt wesentliche wirtschaftliche Vorteile mit sich.

Sie zeigt insbesondere eine hohe Abriebfestigkeit und Korrosionsbeständigkeit, auch gegenüber aggressiven Chemikalien, wie Laugen und Säuren, und eine hohe Wasserbeständigkeit. Die Temperaturwechselbeständigkeit der erfindungsgemässen Masse ist besonders gut. Die erfindungsgemäse Masse ist weiterhin auf leichte Weise zu verarbeiten, sie ist sehr oxidationsbeständig und ihre Wärmeausdehnung ist gering.

Die erfindungsgemässe Schienenuntergussmasse enthält Bitumen. Als Bitumenkomponente können die Bitumensorten und -gemische, die in der Vergangenheit für Schienenuntergussmassen eingesetzt wurden, verwendet werden. Bevorzugt wird eine standfeste Masse aus Oxidationsbitumen, vorzugsweise Oxidationsbitumen 85/25 und Hochvakuumbitumen (HBV), vorzugsweise HVB 90/100 oder 95/105 eingesetzt. Diese Bitumen sollen im Verhältnis von 1:2 eingesetzt werden. Für den Fachmann ist es leicht ersichtlich, die entsprechenden Verhältnisse zu bestimmen und die geeigneten Bitumensorten auszuwählen.

Als elastifizierende Komponente wird in der erfindungsgemässen Masse Kautschuk verwendet. Bevorzugt wird ein Sequenz-EPDM-Kautschuk eingesetzt. Es handelt sich um ein Terpolymerisat, welches aus Ethylen, Propylen und einem nicht konjugierten Dien, wie beispielsweise Ethylidennorbornen (EN), hergestellt wird. Das Produkt kann beispielsweise nach dem Ziegler-Natta-Verfahren im Einstufenverfahren hergestellt werden. Ein bevorzugtes Sequenz-Polymeres enthält ca. 30 Gew.-% Propylen und ca. 7 Doppelbindungen auf 1000 Kohlenstoffatome. Es enthält zusätzlich einen Stabilisator. Derartiger Kautschuk ist im Handel erhältlich und wird in verschiedenen Lieferformen, wie leicht gepresste Ballen, Krümel oder Pulver, konfektioniert und auch so eingesetzt. In der erfindungsgemässen Masse ist jedoch der Kautschuk nicht auf den oben erwähnten Kautschuk beschränkt, und alle die Kautschuksorten, die in der Vergangenheit für diesen oder einen ähnlichen Zweck eingesetzt wurden, können auch in der erfindungsgemässen Masse verwendet werden.

Die erfindungsgemässe Masse enthält weiterhin einen Füllstoff. Die erfindungsgemässe Masse enthält als Füllstoff Siliciumcarbid, Borcarbid, Titancarbid, kubisches Bornitrid, Titanborid oder Gemische dieser Verbindungen. Die Füllstoffe sollen nach der erweiterten Mohsschen Härteskala eine Härte über 10, vorzugsweise über 12, besonders bevorzugt über 13, aufweisen. Eine Härte von 12 nach der erweiterten Mohsschen Härteskala entspricht einer Knoop-Härte von $K_{100} \geqq 2000$, eine Härte von 13 nach der erweiterten Mohsschen Härteskala einer Knoop-Härte von $K_{100} > 23,54 kN/mm^2$ $(2400 kp/mm^2)$. Derartige Produkte sind im Handel erhältlich. Es können Produkte mit unterschiedlichen Körnungen verwendet werden. Bevorzugt werden Produkte mit einer Körnung kleiner als 15 µm verwendet.

Besonders bevorzugt wird Siliciumcarbid mit einer Härte 13 nach der erweiterten Mohsschen Härteskala eingesetzt. Es handelt sich um ein Produkt, das im Handel erhältlich ist und das im elektrischen Widerstandsofen aus Quarzsand hergestellt wird. Das Produkt fällt mit verschiedenen Körnungen an. Bevorzugt wird ein Typ der Körnung 15 µm verwendet.

In der erfindungsgemässen Masse wird zur Erhöhung des Verformungswiderstands ein textiles Armierungsmittel in Form von thermostabilen Fasern, wie Aramidfasern, z.B. Kevlar® 49, hochfeste Stahlfasern, Mineralfasern, z.B. S-Glasfasern®, Kohlefasern usw. eingesetzt. Diese Fasern sind im Handel erhältlich. Die Fasern müssen hervorragende Bindemittelaffinität, gute mechanische Eigenschaften aufweisen und nicht bzw. schwer entflammbar sein. Sie sollten physiologisch unbedenklich und möglichst unschmelzbar sein.

Bevorzugt wird in der erfindungsgemässen Masse eine Kurzschnittkohlefaser verwendet, die sich gut in der Masse homogenisieren lässt.

Bevorzugt enthält die Masse 1 bis 3 Gew.-% thermostabile Fasern.

Eine bevorzugte Rezeptur ist:
35 –57,8 Gew.-% Bitumen
2 –10 Gew.-% elastifizierende Komponente
30 –60 Gew.-% Füllstoff, vorzugsweise Siliciumcarbid
0,2– 5 Gew.-% thermostabile Fasern

Eine besonders bevorzugte Rezeptur für die erfindungsgemässe Schienenuntergussmasse ist beispielsweise die folgende:

45,7 Gew.-% Bitumen
4,0 Gew.-% Sequenz-EPDM-Kautschuk
49,8 Gew.-% Siliciumcarbid
0,5 Gew.-% thermostabile Fasern, vorzugsweise Kurzschnittkohlefasern

Die Herstellung der erfindungsgemässen Masse erfolgt mit den bekannten Rührwerken, wobei die Qualität der Masse von der homogenen Dispergierung des Kautschuks abhängt. Diese wird durch Erhitzen der Bitumenphase auf eine Temperatur im Bereich von 180 bis 250 °C, vorzugsweise 200 bis 220 °C, vorgenommen. Bevorzugt wird in einer Inertgasatmosphäre gearbeitet.

Zur Stabilisierung wird die Faser gegen Ende des Mischvorgangs eingespeist. Es wird eine bei 210 °C bis 250 °C giessfähige Masse erhalten, die in an sich bekannter Weise verarbeitet werden kann.

Nach Fertigung einer Betonwanne und Fixierung der Schiene auf Klötzen wird der Schienenfuss mit der Masse hohlraumfrei untergossen. In der beigefügten Tabelle I sind die Untersuchungsergebnisse dargestellt, die man mit einer bekannten Masse (A), einer Masse, die keine nichtbrennbaren Fasern enthält (B), und der erfindungsgemässen Masse (C) erhält.

Bei den Untersuchungen wurde eine Dreiecksschwingung eingeleitet, die durch die Dämpfung als sinusartige Schwingung wirksam wird.

Die Auswertung der Versuche bei verschiedenen Prüftemperaturen von −20, +20 und +60 °C berücksichtigt die Zahl der Lastwechsel, bis der Bruchzustand erreicht wird oder ein Abbruch dadurch indiziert ist, dass die Masse sich irreversibel plastisch verformt. Das bedeutet, dass die geforderte Standfestigkeit nicht mehr erfüllt ist.

Die nachstehende Tabelle I zeigt die Untersuchungsergebnisse.

Tabelle I

| Probe Nr. Art der Masse | Raum-dichte (g/cm³) | Prüf-temperatur (°C) | Anzahl der Lastwechsel | Verformungsrate am Ende der Beharrungsphase (%) | Verformungs-rate:Last-wechsel ε * (%/Lastw.) | Überlast/ Unterlast kN |
|---|---|---|---|---|---|---|
| A (Stand der Technik) | 1,422 | −20 | über 10⁵ | kein Bruch | 0,000052 | 6,1/1,8 |
| | 1,425 | +20 | 3100 | 17,5 | 0,0056 | 6,1/1,8 |
| | 1,433 | +60 | 48 | 25,0 | 0,52 | 6,1/1,8 |
| B (Masse L2 erfin-dungsgemäss) | 1,548 | −20 | über 10⁵ | kein Bruch | 0,00000043 | 6,1/1,8 |
| | 1,537 | +20 | 60 000 | 14,4 | 0,000016 | 6,1/1,8 |
| | 1,540 | +60 | 99 | 33,4 | 0,34 | 6,1/1,8 |
| C (Masse L4 erfin-dungsgemäss) | 1,532 | −20 | über 5 · 10⁵ | 0,58 kein Bruch | 0,00000012 | 6,1/1,8 |
| | 1,535 | +20 | über 10⁵ | 0,11 kein Bruch, dann zunehmende Verf. | 0,0000011 | 6,1/1,8 |
| | 1,530 | +60 | 203 | 3,25 | 0,020 | 6,1/1,8 |

Zur Bestimmung der Nützlichkeit der Massen beim Legen von Schienen wurde die Eindrucktiefe bestimmt. Die Eindrucktiefe ist ein Mass dafür, wie gut die Masse für den beabsichtigten Zweck geeignet ist. Es wurden die in der folgenden Tabelle II aufgeführten Massen verwendet.

Tabelle II
Zusammensetzung der Massen

| Bez. | Bitumina | Kautschuk | Füller | Faser |
|---|---|---|---|---|
| L 2 | 85/25 15% HVB 30% | Buna 4% | 51% | — |
| L 4 | 85/25 15,2% HVB 30,5% | Buna 4% | 49,8% | 0,5% |

Die Prüfung der Eindrucktiefe wurde mit einem ebenen Stempel von 100 mm² Grundfläche bei 22 °C im belasteten Zustand vorgenommen. Die Messung erfolgte in 10-Minuten-Abständen. Die erhaltenen Ergebnisse sind in der folgenden Tabelle III dargestellt.

Tabelle III

| Zeit | 10′ | 15′ | 20′ | 25′ | 30′ | 40′ | Δ |
|---|---|---|---|---|---|---|---|
| L2 (mm) | 0,235 | 0,275 | 0,300 | 0,315 | 0,328 | 0,35 | 0,115 |
| L4 (mm) | 0,170 | 0,173 | 0,173 | 0,175 | 0,190 | 0,223 | 0,053 |

Aus den Ergebnissen ist klar erkennbar, dass bei der erfindungsgemässen Masse, welche Füllstoff und Fasern enthält, die Eindrucktiefe um rund ein Drittel geringer ist als bei der Masse, die nur Kautschuk und Füllstoff enthält. Dies war überraschend und hat nicht nahegelegen, zumal die hier vorgelegten Ergebnisse nur einen Zeitraum von 40 Minuten beinhalten. Wenn man beachtet, dass die Massen über Monate hinweg stark beansprucht werden, ist aus diesen Ergebnissen sofort ableitbar, dass die erfindungsgemässe Masse wesentlich besser ist als eine Masse, die nur Kautschuk und Füllstoff enthält.

Die folgenden Beispiele erläutern die Erfindung, ohne sie zu beschränken.

Beispiel 1
In einen Reaktor mit Heizmantel und Rührer wird die Bitumenmasse gegeben. Diese wird auf eine Temperatur im Bereich von 200 bis 220 °C erhitzt. Zu der Bitumenmasse gibt man den genannten Kautschuk und rührt diesen bis zur ho-mogenen Verteilung bei optimalem Relaxations-vermögen. Danach wird Siliciumcarbid im Bereich von 5–15 µm hinzugegeben und bis zur vollständigen Homogenisierung (mindestens 30 Min.) eingerührt. Zu diesem Gemisch gibt man dann Kurzschnittkohlenstoffasern, die ebenfalls homogen verteilt werden müssen (ca. 1 Std.). Die Masse wird in Formen vergossen und als Blöcke ausgeliefert.

Durch Erhitzen auf eine Temperatur im Bereich von 210 bis 250 °C erhält man eine gut giessfähige Masse.

Es wurde die folgende Rezeptur verwendet:
Massenzusammensetzung:

| | |
|---|---|
| Bitumen 85/25 | 15,2 kg |
| Bitumen HVB 90/100 | 30,5 kg |
| Kautschuk | 4,0 kg |
| Siliciumcarbid | 49,8 kg |
| Kurzschnittkohlenstoffasern | 0,5 kg |

**Patentansprüche**

1. Schienenuntergussmasse, enthaltend Bitu-men, eine elastifizierende Komponente und einen Füllstoff, dadurch gekennzeichnet, dass sie
25–67,8 Gew.-% Bitumen
2–10 Gew.-% Kautschuk
30–60 Gew.-% Siliciumcarbid, Borcarbid, Titan-carbid, kubisches Bornitrid, Ti-tanborid oder
Gemische dieser Verbindungen mit einer Härte nach der erweiterten Mohsschen Härteskala über 10 als Füllstoff und

0,2– 50 Gew.-% Aramidfasern, Stahlfasern, Mineralfasern oder Kohlefasern enthält.

2. Schienenuntergussmasse nach Anspruch 1, dadurch gekennzeichnet, dass sie als Bitumenkomponente eine standfeste Masse aus Oxidationsbitumen und/oder Hochvakuumbitumen enthält.

3. Schienenuntergussmasse nach Anspruch 1 oder 2, dadurch gekennzeichnet, dass sie als Kautschuk EPDM-Kautschuk enthält.

4. Schienenuntergussmasse nach mindestens einem der vorhergehenden Ansprüche, dadurch gekennzeichnet, dass sie als Füllstoff Siliciumcarbid, Borcarbid, Titancarbid, kubisches Bornitrid, Titanborid oder Gemische dieser Verbindungen mit einer Härte 13, nach der erweiterten Mohsschen Härteskala enthält.

5. Schienenuntergussmasse nach mindestens einem der Ansprüche 2 bis 5, dadurch gekennzeichnet, dass sie als Kohlefasern Kurzschnittkohlefasern enthält.

6. Verfahren zur Herstellung einer Schienenuntergussmasse nach einem der vorhergehenden Ansprüche, dadurch gekennzeichnet, dass man in einem Rührwerk das Bitumen auf eine Temperatur im Bereich von 180 bis 250°C erhitzt, zu der Bitumenmasse Kautschuk zugibt und unter Rühren und Erhitzen dispergiert, die Masse solange rührt, bis sie knötchenfrei und hochelastisch ist, danach den Füllstoff und anschliessend die Aramidfasern, Stahlfasern, Mineralfasern oder Kohlefasern hinzugibt und weiterrührt, bis man eine homogene Masse erhält.

## Claims

1. An under-rail casting compound containing bitumen, an elasticizing component and a filler, characterized in that it contains
from 25 to 67.8% by weight bitumen
from 2 to 10 % by weight rubber
from 30 to 60 % by weight silicon carbide, boron carbide, titanium carbide, cubic boron nitride, titanium boride or
mixtures of these compounds having a hardness on the extended Moh's hardness scale of greater than 10 as filler and
from 0.2 to 5% by weight aramide fibers, steel fibers, mineral fibers or carbon fibers.

2. An under-rail casting compound as claimed in claim 1, characterized in that it contains a stable mass of oxidation bitumen and/or high-vacuum bitumen as the bitumen component.

3. An under-rail casting compound as claimed in claim 1 or 2, characterized in that it contains EPDM rubber as the rubber.

4. An under-rail casting compound as claimed in at least one of the preceding claims, characterized in that it contains as filler silicon carbide, boron carbide, titanium carbide, cubic boron ·nitride, titanium boride or mixtures of these compounds having a hardness of 13 on the extended Moh's hardness scale.

5. An under-rail casting compond as claimed in at least one of claims 2 to 5, characterized in that it contains short-cut carbon fibers as the carbon fibers.

6. A process for the production of the under-rail casting compound claimed in any of the preceding claims, characterized in that the bitumen is heated to a temperature of from 180 to 250°C in a mixer, rubber is added to the bitumen mass and dispersed therein with stirring and heating, the mass is tirred until it is free from nodules and highly elastic, the filler and then the aramide fibers, steel fibers, mineral fibers or carbon fibers are added and stirring continued until a homogeneous mass is obtained.

## Revendications

1. Masse à couler sous des rails, contenant du bitume, un constituant élastifiant et une charge, caractérisé en ce qu'elle renferme:
25 à 67,8% en poids de bitume,
2 à 10 % en poids de caoutchouc,
30 à 60 % en poids de carbure de silicium, de carbure de titane, de nitrure de bore cubique, de borure de titane, ou
des mélanges de ces composés d'une dureté, d'après l'échelle de dureté de Mohs élargie, supérieure à 10, comme charge et
0,2 à 5% en poids de fibres d'aramide, de fibres d'acier, de fibres minérales ou de fibres de carbone.

2. Masse à couler sous des rails selon la revendication 1, caractérisée en ce qu'elle renferme, comme constituant bitumineux, une masse stable de bitume d'oxydation et/ou de bitume par vide poussé.

3. Masse à couler sous des rails selon la revendication 1 ou 2, caractérisée en ce qu'elle renferme, comme caoutchouc, un caoutchouc EPDM.

4. Masse à couler sous des rails selon l'une au moins des revendications précédentes, caractérisée en ce qu'elle renferme, comme charge, du carbure de silicium, du carbure de bore, du carbure de titane, du nitrure de bore cubique, du borure de titane ou des mélanges de ces composés de dureté 13, selon l'échelle de dureté Mohs élargie.

5. Masse à couler sous des rails selon l'une au moins des revendications 2 à 5, caractérisée en ce qu'elle renferme, comme fibres de carbone, des fibres de carbone coupées courtes.

6. Procédé de préparation d'une masse à couler sous des rails selon l'une des revendications précédentes, caractérisé en ce que, dans un agigateur mécanique, on chauffe le bitume à une température comprise entre 180 et 250°C, on ajoute du caoutchouc à la masse bitumineuse et on le disperse en agitant et en chauffant, on agite la masse jusqu'à ce qu'elle soit non graveleuse et très élastique, puis l'on ajoute la charge et subeśquemment les fibres d'aramide, les fibres d'acier, les fibres minérales ou les fibres de carbone et l'on continue à agiter jusqu'à ce qu'on obtienne une masse homogène.